# EUROPEAN PATENT SPECIFICATION

(11) **EP 3 263 305 B1**
(45) Date of publication and mention of the grant of the patent: **20.01.2021**
(21) Application number: 16754797.5
(22) Date of filing: 19.02.2016
(51) Int. Cl.: B29B 17/02, B01J 29/44, B01J 29/46, B01D 53/86, B01J 37/02, B01J 37/18, B01D 53/00, B01J 23/40, B01J 23/58, B01J 29/072, B01J 35/04, C10K 1/32, C10K 1/34, C10K 1/20, B01J 29/068, B01J 23/755, B01J 23/60, B01J 23/63

(54) **METHOD FOR TREATING VAPOURS GENERATED DURING THE PROCESS FOR RECOVERING CARBON FIBRES FROM COMPOSITES BY PYROLYSIS**
VERFAHREN ZUR BEHANDLUNG VON WÄHREND DES VERFAHRENS ZUR RÜCKGEWINNUNG VON KOHLENSTOFFFASERN AUS VERBUNDMATERIALIEN DURCH PYROLYSE ERZEUGTEN DÄMPFEN
MÉTHODE POUR LE TRAITEMENT DE VAPEURS PRODUITES DANS LE PROCESSUS DE RÉCUPÉRATION DE FIBRES DE CARBONE DE COMPOSITES PAR PYROLYSE

(30) Priority: 23.02.2015 ES 201530223
(43) Date of publication of application: 03.01.2018
(73) Proprietor: Universidad Del Pais Vasco Euskal Herriko Unibertsitatea, 48940 Leioa (Vizcaya) (ES)
(72) Inventor: LÓPEZ URIONABARRENECHEA, Alexander, 48940 Leioa Vizcaya (ES); DE MARCO RODRÍGUEZ, Isabel, 48940 Leioa Vizcaya (ES); CABALLERO IGLESIAS, Blanca María, 48940 Leioa Vizcaya (ES); GASTELU OTAZUA, Naia, 48940 Leioa Vizcaya (ES); HERNÁNDEZ SÁINZ, Ainhoa, 48940 Leioa Vizcaya (ES); ADRADOS LÓPEZ DE VIÑASPRE, Aitziber, 48940 Leioa Vizcaya (ES); SOLAR IRAZABAL, Jon, 48940 Leioa Vizcaya (ES)
(74) Representative: Balder IP Law, S.L.
(86) International application number: PCT/ES2016/070107
(87) International publication number: WO 2016/135359

(56) References cited:
- EP-A1- 2 783 764
- WO-A1-03/089212
- PIMENTA ET AL.: 'Recycling carbón fibre reinforced polymers for structural apllications: Technology review and market Outlook.' WASTE MANAGEMENT vol. 31, no. 2, 01 February 2011, pages 378 - 392, XP027542673 DOI: 1031016/J.WASMAN.2010.09.019

## Description

### Field of the invention

The present invention falls within the field of treating industrial waste, particularly waste composites of carbon fibre, such as composites of carbon fibre at the end of the service life thereof or production waste generated by the producers. In particular, it relates to a method for treating vapours generated during the pyrolysis of composites of carbon fibre, which is a process used for recovering carbon fibres.

### Background of the invention

Composite materials or carbon fibre (known in English literature as "carbon fibre reinforced polymers", CFRP) composites are mainly made up of carbon fibres (CF) and a polymer resin, typically with a thermoset nature. Among the most used resins are epoxy, phenolic and polyester resins. CF is a material that has a tensile strength 10 times greater than steel, whilst also having a density that is 10 times lower. Moreover, it has greater resistance against compression, bending and torque than many other materials used in construction. Therefore, it is a widely used material, for which demand is expected to exponentially increase in the coming years. Currently, 95% of the CF manufactured is used in CFRP composites. The addition of the polymer resin, to form the composite, means that the properties of CF are strengthened and enables pieces made of this material to be machined. The main sectors that use these materials are the aviation and defence industries, such as structural parts of aircraft and helicopters, the wind energy industry, in the construction of the rotor blades of wind turbines, and the automotive industry, which similarly to the aviation industry uses the low weight and resistance of these materials to build ships/vehicles that are lighter in weight and therefore have lower CO₂ emissions for the same power. These industry sectors currently generate large amounts of waste of this material at the end of the useful life of the pieces or products thereof, and in addition to the production waste generated by CFRP manufacturers themselves. Specifically, the generation of CF waste directly from the aviation industry reaches 8000 t/year in Europe alone, of which 2400 t/year are generated in Spain. Moreover, it should be noted that the generation of this type of residue is expected to increase, given the predictions of demand for this material in the coming years, supported by the exceptional properties thereof.

CF is an expensive material and sometimes demand exceeds production capacity. These are two important reasons for the recovery of CF from waste composites, whether they are used materials or production waste. There are some industrial processes for recovering CF from composites, based on a pyrolysis and controlled oxidation process in two stages. In the first stage the waste is subjected to heating in the absence of oxygen (pyrolysis) or in substoichiometric oxygen conditions. This heating causes the thermal decomposition of the polymer resin in the form of vapours, while CF remain unchanged, thus achieving the separation of the fibres and the polymer. The decomposition of the resin in this first stage is not total, and part of the polymer resin remains with the fibres along with char particles (carbon waste) that form during the decomposition process of the resin. Therefore, the waste is subjected to a controlled oxidation stage to remove the polymer and char remains from the first treatment. After this second stage, clean CF with nominal widths the same as the initial ones are obtained. These CFs may be reimpregnated with new resins and are intended for the manufacture of thermoset materials for structural and non-structural applications, or to be used as reinforcement for thermoset materials.

During the above described process for recovering CF, vapours are also generated that result from the decomposition of the polymer resin.

There are two main options for treating vapours that are generated during the decomposition of the resin: 1) combustion/incineration and 2) cooling for the recovery of chemical compounds or combustible fractions. The combustion/incineration is the treatment carried out by current CFRP waste treatment facilities since the quality of the products obtained after cooling the vapours is low and applications for these products in the market cannot be found. This can be noted in the few publications that have described the characteristics of the products obtained after cooling the vapours of the decomposition of waste composites [A.M. Cunliffe, N. Jones et al. (2003). Recycling of fibre-reinforced polymeric waste by pyrolysis: thermo-gravimetric and bench-scale investigations. Journal of Analytical and Applied Pyrolysis 70, 315-338; M.A. Nahil, P.T. Williams (2011). Recycling of carbon fibre reinforced polymeric waste for the production of activated carbon fibres. Journal of Analytical and Applied Pyrolysis 91, 67-75; F.A. Lopez, O. Rodriguez y col. (2013). Recovery of carbon fibres by the thermolysis and gasification of waste prepreg. Journal of Analytical and Applied Pyrolysis 104, 675-683; y V. Goodship (Ed), (2010). Management, recycling and reuse of waste composites. Woodhead Publishing, Cambridge, UK, ISBN: 978-1-84569-462-3].

The authors of the invention have also confirmed that by cooling vapours, which causes part of them to condense, liquids are obtained, usually formed by two phases, one aqueous phase and another organic phase, both of which lack usefulness. The two liquid phases are usually formed by monoaromatic and polyaromatic compounds substituted with N, O and S, which makes it very hard to industrially use and requires them to be managed as hazardous waste, especially in the organic phase thereof. In addition to liquids, a gaseous fraction is obtained mainly made up of CH₄, CO₂, H₂ and CO, which could be used as an average-quality gaseous fuel, but the recovery of which would entail the generation of the aforementioned liquid phase, which cannot be used and the management of which entails a significant cost.

Due to the poor properties of the liquid products obtained by cooling, the current CFRP waste treatment facilities use the combustion/incineration as the least worst alternatives for treating vapours from the thermal decomposition of the resins.

WO 03/089212 A1 discloses a method for recovering carbon and/or glass fibers from scraps. The method includes pyrolysis of scraps, waste and composite materials of fiber-reinforced plastic to eliminate the plastic matrix and a subsequent hot treatment, in presence of upgrading gas, of the recovered fibers for removing carbon residues. The recovered fibers can be reutilized in the manufacturing of products with mechanical features very similar to those of rolled sections produced with virgin fibers.

EP 2 783 764 A1 discloses an elongated, continuously working pyrolysis furnace and a process for recovering carbon fibers from carbon fiber-containing plastics, in particular from carbon fiber-reinforced plastics. The pyrolysis furnace is an indirectly heated rotary kiln. The furnace includes a rotary tube provided with outlet openings at least on a part of its length on its mantle for the discharge of pyrolysis gas and an externally insulated housing at least partially surrounding the rotary tube. Inlet passages are also provided. In light of the foregoing, there is the need in the state of the art to provide an alternative method to the previous ones, which at least partially overcome the mentioned disadvantages.

### Description of the invention

In a first aspect, the invention therefore relates to an improved method for treating vapours generated during pyrolysis of composites of carbon fibre. The composites of carbon fibre that are subjected to pyrolysis to recover the fibres can be any and all, such as waste from CFRP production generated by the manufacturers themselves, or carbon fibre composites at the end of the service life thereof. This method, hereinafter method of the invention, comprises passing the vapours generated during pyrolysis of composites of carbon fibre through a reactor which is at a high temperature comprised between 500 °C and 1000 °C and is filled with a solid bed.

In theory, the reactor can be any shape and have any dimensions. Preferably, it has a tubular shape, that it is a cylindrical reactor and more preferably has a much smaller diameter than the length. The reactor is connected in series to the pyrolysis reactor for composites, in a vertical shape or with a horizontal geometry, preferably in a vertical shape. It is important that the connection between reactors is heated to prevent undesired prior condensations of the vapours.

In a particular embodiment of the method of treatment of the invention, the vapours pass through the reactor that is at a temperature equal to or greater than 600 °C. In another particular embodiment, the temperature is equal to or greater than 700 °C. In another particular embodiment, the temperature is equal to or greater than 800 °C. In another particular embodiment, the temperature is equal to or greater than 900 °C. The reactor is externally heated through any heating system, such as an electric furnace. The manufacturing material of the reactor must be capable of withstanding the aforementioned operating conditions.

The solid bed takes up the entire length of the reactor and is formed by particles of a solid material. The solid bed reduces the speed at which the vapours pass through the reactor such that the residence time of the vapours in the reactor increases, and thus the number and the conversion of the chemical reactions in the centre thereof, provided by the high temperature of the treatment.

The solid material or bed is selected from the group formed by quartz, ceramic and refractory materials (including CSi), coke and carbon solids from the pyrolysis of biomass, and mixtures thereof. In a preferred embodiment, the solid bed is selected from the group of ceramic or refractory materials, including CSi.

The density of the solid bed depends on the specific solid material.

In a particular embodiment, the material is quartz, and the density of the solid bed is between 1200 and 1400 kg of filler material per cubic metre of reactor.

In another particular embodiment, the material is selected from the group of ceramic and refractory materials (including CSi) and the density of the bed is between 1000 and 2000 kg of filler material per cubic metre of reactor, preferably between 1200 and 1700 kg.

In another particular embodiment, the material is selected from the group of coke and carbon solids, and the density of the bed is between 400 and 1000 kg of filler material per cubic metre of reactor, preferably between 600 and 800 kg.

The particle size of the solid material is variable, and in each case is that which corresponds to making the densities of the aforementioned solid beds comply, which depends on the type of specific solid material and the dimensions of the reactor used. The particle size can be easily determined in each case by the person skilled in the art, since it is determined by the ratio between the solid bed density and reactor size. For example, for a tubular reactor with a volume of 1 dm³, the aforementioned bed densities enable particle sizes typically between 0.3 and 3.2 mm, for example equal to or less than 2 mm, particularly equal to or less than 1 mm, more particularly equal to or less than 0.5 mm to be worked with.

In a particular embodiment, the method of treatment comprises only using a solid bed in the reactor without a catalyst.

In another particular embodiment, the method of treatment comprises using a solid bed and a solid catalyst in the reactor. Said solid catalyst has an acid function, reforming function, or both, preferably both functions. The acid function of the catalyst aids the cracking reactions of organic molecules, and the reforming function aids the conversion of organic compounds to hydrogen and carbon monoxide. Therefore, the use of a catalyst with both acid and reforming functions contributes to breaking the bonds of heavy organic compounds, converting them into lighter organic compounds, which are subsequently converted into H₂ and CO. The intensity of each one of the acid or reforming functions is regulated with the selection of the catalysts that provides these functions and therefore is variable depending on the nature of the catalyst itself. The intensity can be established for each particular embodiment depending on the type of resin of the composite.

The solid catalyst comprises at least one metal oxide supported on an acid substrate. The acid substrate can in theory be any conventional acid substrate known by a person skilled in the art. In a particular embodiment, the substrate can be, among others, alumina (α and γ), zeolites, silica, titanium, mesoporous materials (for example SBA-15 and MCM-41), amorphous silica alumina (ASA) and the mixtures thereof, preferably a zeolite.

The metal oxide supported can be any transition metal oxide. In a particular embodiment, the transition metal oxide is selected from among nickel oxide, ruthenium oxide, palladium oxide, rhodium oxide, platinum oxide and iridium oxide. In a preferred embodiment, the metal oxide is nickel oxide. The metal in oxidation state (0) of the metal oxide in question is the one that has the reforming function, also referred to as the active phase of the catalyst.

In a particular embodiment, the solid catalyst comprises, in addition to the aforementioned metal oxide supported on a substrate, at least one modifier metal oxide, also referred to as dopant. Examples of these modifier metal oxides are, among others, lanthanum oxide, magnesium oxide, potassium oxide, sodium oxide, calcium oxide, cerium oxide, zirconium oxide, zinc oxide and mixtures thereof. In a preferred embodiment, the metal oxide is cerium oxide, zirconium oxide, calcium oxide or a mixture of two or all three of them.

These modifier metal oxides have the function of varying the characteristics of the acid substrate, for example reducing excessive acidity of certain substrates and/or decreasing the tendency to generate coke, very common in acid substrates, and can result in a premature loss of activity of the solid catalyst.

In a particular embodiment, the modifier is cerium oxide. In this respect it has been shown that Ce(0) has a great ability to be oxidised and reduced, being very useful in treating vapours with oxygenated compounds, such as the case of the invention. In this regard, when Ce(0) is oxidised, it "removes" oxygen from the vapour compounds, and when cerium is reduced, it "returns" the oxygen to the coke deposited in the catalyst, oxidising the coke deposits to CO₂.

The amount of catalyst used in each particular embodiment strongly depends on the specific application, that is, the nature of the vapour and gas that is to be treated and the nature of the catalyst itself, since there are some more selective catalysts and/or catalysts with a greater chemical resistance and thermal stability than others. Essentially, a ratio is established that ensures the external diffusion is not the limiting step of the catalytic process, according to Mears' criterion [H. Scott Fogler, Elementos de Ingeniería de las Reacciones Químicas, Prentice Hall, 3rd edition]. Depending on these parameters, large ratios that vary between 10/1 and 1000/1 in g of vapour-gas to be treated/g catalyst are typically worked with. In a particular embodiment, the ratio is comprised between 10/1 and 200/1. However, the suitable ratio can be determined in each case depending on the type of polymer resin of the composite in question and the nature of the catalyst.

The solid catalyst can be obtained commercially or can be synthesised by the person skilled in the art according to known methods.

According to a particular embodiment, the solid catalyst is prepared according to a method comprising preparing at least one metal oxide supported on an acid substrate by the wet impregnation method, following for example the guidelines disclosed by the IUPAC (1995) Manual of Methods and Procedures for Catalyst Characterization. Pure and Applied Chemistry, 67, 1257-1306.

The wet impregnation method in turn comprises a calcination step of a precursor compound of the supported metal oxide, where the calcination temperature depends on the temperature at which the method of treatment of the invention is to be carried out. During the calcination, the precursor of the oxide (for example, a salt) is transformed into said metal oxide, it is bonded to the substrate and is sintered into larger particles. In this sense, it is preferable that the calcination temperature is a temperature that is equal to or lower than that to be used in the method of treatment of the invention to avoid "surface changes" during the aforementioned method of treatment of the invention, for example greater sinters and loss of catalyst porosity. The term lower in this context means not performing calcination at temperatures below 120 °C, lower than the treatment temperature. The transition metal oxide obtained must be subsequently reduced. In a particular embodiment wherein the metal in the active phase is nickel, the precursor is, for example, a nickel salt (usually nitrate), which is converted into nickel oxide when it is calcined, and which gives rise to the metal Ni(0) in the metal state (active phase) when it is reduced.

The modifier oxide of the substrate can be included during the method for preparing the solid catalyst, during wet impregnation, in the form of a precursor of said oxide similarly as is carried out with the transition metal oxide constituting the active phase of the catalyst. The result of the method for preparing the catalyst is a solid catalyst in powder form.

Depending on the origin of the catalyst (commercial or synthesised by a person skilled in the art), it may be placed in different ways in the reactor.

If the solid catalyst is commercial it can be acquired in powder form or in any specific geometric shape (spherical balls, cylindrical pellets, pierced cylinders, etc.). In the case of having a specific geometric shape, it can thus be inserted directly in the reactor or it can be previously ground to obtain a powder and used in this way. Thus, in a preferred embodiment of the invention, the catalyst is inserted in the reactor in powder form.

In a particular embodiment, the solid catalyst powder is placed dispersed on the solid bed along the entire length of the reactor. In another particular embodiment of the invention, the solid catalyst is impregnated on a mechanical support referred to as a monolith. Preferably, the impregnated monolith is located in the centre of the reactor, that is, the reactor is filled with solid bed up to half the length thereof, the monolith is placed, and the reactor is subsequently filled with solid bed up to the end of the length thereof.

The monolith typically has a honeycomb shape and can be made of any conventional material. In a particular embodiment, the monolith is made of a material selected from the group formed by ceramic materials (cordierite, mullite, perovskite, α-aluminas, hexa-aluminates, zeolites, CSi), metal compounds (ferritic steels, austenitic steels, nickel-chromium-based non-ferrous alloys) and the mixtures thereof. In a more particular embodiment, the monolith is ceramic, preferably cordierite.

The monolith is obtained, for example, from commercial pieces, which may have suitable dimensions to be inserted directly in the reactor or may need to be cut in the shape suitable for the reactor. In a particular embodiment, they are cut into cylindrical blocks with the same inner diameter as the tubular reactor. The height thereof is variable depending on the amount of catalyst that is to be impregnated therein and on the dimensions of the reactor. In a particular embodiment, for a reactor complying with a length/diameter ratio of 20/1, the monolith height/reactor length ratio can vary between 1/50 and 1/10, but said ratio can vary within wide margins depending on the dimensions of the reactor and the type of resin of the pyrolised composite.

The function of the monolith is to be a mechanical support of the powder solid catalyst. Likewise, as it has a honeycomb structure, the monolith contributes to the vapour-gas passing through to do so evenly distributed along the entire section, avoiding preferential paths and/or areas where the catalyst does not come into contact with the vapour-gases, thereby optimising the method of the invention. In the same way, it ensures the even distribution of the catalyst along the width of the reactor diameter. In short, by optimising the contact, the maximum utilisation of the catalyst is achieved.

In a particular embodiment, the solid catalyst is impregnated on a monolith according to a method comprising impregnating the monolith, using the wet impregnation method, with the catalyst powder. The wet impregnation of the monolith is carried out in a conventional manner following the teachings described, for example, in publications such as: J.A. Gómez-Cuaspud, M. Schmal (2013), Effect of metal oxides concentration over supported cordierite monoliths on the partial oxidation of ethanol, Applied Catalysis B: Environmental 148-149, 1-10; Albert Casanovas, Carla de Leitenburg, Alessandro Trovarelli, Jordi Llorca (2008), Catalytic monoliths for ethanol steam reforming, Catalysis Today 138, 187-192; o Amanda Simson, Earl Waterman, Robert Farrauto, Marco Castaldi (2009), Kinetic and process study for ethanol reforming using a Rh/Pt washcoated monolith catalyst, Applied Catalysis B: Environmental 89, 58-64.

In general, the impregnation of the monolith comprises forming a suspension of the catalyst powder, which can be prepared by a person skilled in the art or can be commercially prepared as described above, in a suitable solvent, submerging the catalyst in said suspension, and drying the impregnated monolith in order to eliminate the solvent. These steps may be repeated as many times as necessary until the monolith is impregnated with the amount required in each case of catalyst powder. Then, the impregnated monolith is calcined at a temperature close to but lower than that which is to be used in the method for treating vapours of the invention, following the same temperature criterion as for the calcination of the aforementioned catalyst.

In a particular embodiment, the method of treatment comprising placing the monolith containing the impregnated solid catalyst in the middle of the reactor, surrounded by the solid bed. After placing it in the reactor, the catalyst is subjected to a reduction reaction *in situ* such that all the metal oxides contained by the catalyst are reduced to a metal state in the reactor itself, both the metal(s) comprised in the active phase and the modifier metal(s). These species must be found in a metal state in order to comply with the respective functions thereof during the method of treatment of the invention. In another particular embodiment, the reduction can be carried out *ex situ* and the already active catalyst is kept in a non-oxidising environment (immersed in isooctane, for example) to use in the treatment.

The reduction of the metal oxide or oxides can be carried out a priori with any reducing agent capable of transforming the metal oxide in question into a metal (0). In a particular embodiment of the reduction, the reducing agent is hydrogen or carbon monoxide, preferably hydrogen. The reduction is carried out in the presence of the reducing agent and an inert gas that dissolves and transports it, for example H₂ in an inert gas. Inert gas, in the context of the invention, must be understood as any gas capable of transporting the reducing agent that does not cause any chemical reaction during the use thereof, such as N₂. The proportion of reducing agent with respect to the inert gas can vary within wide margins. In a particular embodiment, the amount of reducing agent dissolved in inert gas can vary, for example, between 2% and 100% [reducing gas volume/total mixture volume (inert gas + reducing gas)], more particularly 5-50%, and preferably approximately 10% by volume of reducing agent in inert gas. The method of treatment of the invention comprises keeping the reactor that contains the reduced catalyst in inert atmosphere conditions to prevent the oxidation thereof before it performs its function. As the method of the invention takes place, the atmosphere of the reactor transforms into that which is formed by the decomposition of the vapours generated during pyrolysis of the resin of the composite.

The vapours that emerge from the reactor after having passed through it are cooled and partially condensed, generating a liquid product and a gaseous product. The liquid product is formed by an organic phase (tars) and an aqueous phase (water with dissolved organic compounds).

The application of the method of the invention enables the organic liquid fraction to be significantly reduced, the quality of the aqueous liquid fraction to be increased and improved with respect to the composition thereof (it reduced the number of dissolved organic compounds) and the amount and quality of the gaseous fraction to be increased and improved, respectively, with respect to that which is obtained by direct condensation of the pyrolysis vapours.

Thus, the organic fraction is generally reduced by at least 75%, preferably by 85%, more preferably by 90%, even more preferably 95%, still more preferably by 97%, and most preferably between 99% and 100% with respect to the amount of organic fraction obtained by direct condensation of the vapours from pyrolysis.

Moreover, an aqueous phase is generated comprising an industrially usable (aniline, pyridine, phenol, etc.) dissolved in water, typically with a proportion of water comprised between 30 and 80% by GC-MS area, preferably equal to or greater than 85%, more preferably equal to or greater than 90%.

The gaseous product or phase generally increases with respect to the amount obtained after direct condensation of the vapours from pyrolysis by at least 160% with the method of treatment of the invention, preferably up to 200% and more preferably up to 250%. The composition of the gaseous phase also improves with respect to that of the gaseous phase obtained after direct condensation of the vapours from pyrolysis, in the sense that high percentages of H₂ are achieved, of up to 40%, preferably up to 50%, more preferably up to 60% (H₂ volume/total gas volume), a very valuable product both as an energy carrier of the future and for industrial chemical synthesis. At the same time, the CO₂ content of the gases is significantly reduced to a third of the amount of CO₂ that is generated without the treatment of the vapours, preferably to one fifth, more preferably to one sixth. CH₄ and CO are also found in the gaseous product, along with other components in a low proportion. Lastly, the calorific value is increased per mass unit of gas, which means a better performance (higher calorific intake) in the case where the gaseous product is used as fuel.

The method of the invention therefore resolves the problem of poor quality and difficult use of the liquid and gaseous products generated in the recovery of carbon fibres (CF) from waste composites by pyrolysis. The difficulty of obtaining chemical compounds for industrial use, along with the operation and obstruction problems caused by the tars produced during pyrolysis, means that current industrial plants for treating this waste simply incinerate the vapours, thereby increasing environmental pollution. This method of the invention significantly improves the properties of the liquid and gaseous products treated and obtained, making it possible to re-use and market them, and preventing them from being incinerated without any treatment, which is what has been happening until now, and which increases the emissions into the environment.

The method for treating the vapours from the thermal decomposition of the resins of the invention is simple, effective and affordable, it can be implemented on a large scale in both CFRP production plants and CFRP waste treatment plants, and enables high added value chemical products to be obtained. The interest of the invention is increased if it is taken into account that the difficulty and cost of managing the products derived from the condensation of vapours tends to be the main reason for the closure of these facilities.

### Examples

### Example 1

### Method for treating vapours generated during pyrolysis of an expired pre-preq made up of CF and polybenzoxazine.

This sample is an example of waste from CFRP manufacturing processes. The treatment was carried out at 900 °C and in the presence of nickel (0) catalyst supported on zeolite ZSM-5 in protonic form (H⁺). This catalyst was previously prepared from zeolite (commercial product) and nickel nitrate hexahydrate, according to the method of wet impregnation, and then calcined at 800°C. Once the zeolite impregnated with powered nickel oxide is prepared, it is impregnated on a cordierite monolith with dimensions of 1 inch in diameter (2.54 cm) and 2 cm in height by means of the wet impregnation method. Then, the tubular reactor was prepared, inserting a CSi filler with a particle size between 1 and 2 mm. With this particle size, the density of the bed is 1500 kg m⁻³. The monolith containing the impregnated powder is placed in the middle of the filler. Then, the nickel oxide was reduced *in situ* at 800 °C, in the presence of H₂ dissolved in N₂ at 10% by volume, for 4 hours. After this, N₂ is passed through the tubular reactor in order to ensure an inert reactor that preserves the catalyst from the oxidation. In turn, it was heated to the treatment temperature, 900 °C. The method for treating vapours was carried out during the time it took for the decomposition by pyrolysis of the polymer resin, keeping a 1 L min⁻¹ of N₂ passing through at all times. At the outlet of the tubular reactor the vapours were passed through a cooling and condensing section. At the end of the treatment the condensed liquid products are collected at one end and the incondensable gases are collected at the other. The results obtained are summarised below (the results of the pyrolysis process are also included but without carrying out the method of treatment of the invention of vapours by way of comparison).

### Yield in condensed liquids (with respect to the mass of initial CFRP waste. % weight):

Without treatment: 13.5% of organic phase and 7% of aqueous phase.

With treatment: 0.6% of organic phase and 10% of aqueous phase.

The organic phase is almost completely eliminated (0.6% are small areas where light sheets of oil adhered on the walls of the condensers are observed, but it is such a small amount that it cannot be collected). This is a very important advantage of the treatment, the elimination of this organic phase (know as tar) is of great interest for the industry related to recovering CF by pyrolysis, since they are heavy and viscous products, which can block the facility, and are difficult to use and are classified as harmful waste if they do not have an industrial use. Yield (with respect to the initial CFRP waste mass. % weight) and composition (% vol) of the gaseous phase:

Without treatment: 5% gas with composition 34-38% CH₄, 21-25% CO₂, 18-20% H₂, 13-17% CO + others. Gross calorific value (GCV) = 24-29 MJ kg⁻¹

With treatment: 13% gas with composition 55-57% H₂, 18-20% CO, 14-16% CH₄, 4-6% CO₂ + others. GCV = 31-35 MJ kg⁻¹

Another of the fundamental advantages of the treatment is that the amount and quality of the gas obtained increase significantly, which is very important because there are diverse applications of this product. On the one hand, more than 50% of the gas is H₂, which is a very valuable product and considered the clean fuel of the future. On the other hand, the gaseous phase obtained has a composition comparable to that of the synthetic gas, which is commonly used in the chemical industry for the synthesis of widely used compounds (for example, chemical synthesis by Fischer-Tropsch, methanol synthesis, synthetic natural gas synthesis). Lastly, it is very important to note the large decrease of CO₂ in these gases, which means that the gross calorific value thereof is considerably higher (close to that of natural gas) and can be used as fuel.

### Composition of the aqueous phase (% area per GC-MS):

Without treatment: 82-83% water, 6-7% aniline, 5-6% phenol, 4-5% organic products not reliably identified.

With treatment: 79-87% water, 13-21% aniline.

Another relevant advantage of the treatment in this example is that the aqueous phase obtained is only made up of aniline and water. Thus, while the aqueous phase obtained without treatment must be managed as a hazardous waste due to containing phenol and aniline (as well as other organic products), which means that it cannot be used industrially (the presence of phenol impairs applications of aniline and vice versa), the aqueous phase obtained with treatment, however, may find industrial applications as aniline is valuable and widely used compound in the chemical industry and very valuable (production of polymers, herbicides, explosives, etc.). Furthermore, in the industrial process itself for producing aniline, this compound dissolved in water is obtained, as it is obtained by means of the treatment of the present invention.

## Claims

1. A method for treating vapour generated during pyrolysis of composites of carbon fibre that comprises passing said vapours through a reactor filled with a solid bed which is at a high temperature comprised between 500 °C and 1000 °C.

2. The method of treatment according to claim 1, wherein the solid bed is selected from the group formed by quartz, ceramic and refractory materials, coke and carbon solids from the pyrolysis of biomass, and mixtures thereof.

3. The method of treatment according to one of claims 1 or 2, wherein the solid bed and a solid catalyst having an acid function, a reforming function, or both, are used.

4. The method of treatment according to claim 3, wherein the solid catalyst comprises at least one transition metal oxide supported on an acid substrate.

5. The method of treatment according to claim 4, wherein the transition metal oxide is selected from the group of nickel oxide, ruthenium oxide, palladium oxide, rhodium oxide, platinum oxide and iridium oxide and the mixtures thereof, preferably nickel oxide.

6. The method of treatment according to claim 4 or 5, wherein the solid catalyst further comprises at least one modifier metal oxide, which is selected from the group formed by lanthanum oxide, magnesium oxide, potassium oxide, sodium oxide, calcium oxide, cerium oxide, zirconium oxide, zinc oxide and mixtures thereof.

7. The method according to any of claims 4 to 6, wherein the substrate is selected from the group formed by alumina (α and γ), zeolites, silica, titanium, mesoporous materials, amorphous silica alumina and the mixtures thereof.

8. The method of treatment according to any of claims 3 to 7, wherein the solid catalyst is commercial or prepared according to a method comprising preparing at least one metal oxide supported on an acid substrate using the wet impregnation method.

9. The method of treatment according to any of claims 3 to 8, wherein the solid catalyst is placed in the reactor with the commercially prepared geometric form.

10. The method of treatment according to any of claims 3 to 8, wherein the solid catalyst is used in powder form.

11. The method of treatment according to claim 10, wherein the solid catalyst powder is inserted dispersed on the solid bed of the reactor.

12. The method of treatment according to claim 10, wherein the solid catalyst in powder form is impregnated on a monolith of a material selected from the group formed by ceramic materials, metal compounds and the mixtures thereof.

13. The method of treatment according to claim 12, wherein the monolith is a ceramic material, preferably cordierite.

14. The method of treatment according to any of claims 3 to 13, wherein the reduction of the metal oxide(s) of the solid catalyst is carried out inside the reactor of the treatment or outside the reactor before its insertion therein.

15. The method of treatment according to any one of the preceding claims, wherein the resulting vapours that have passed through the reactor are cooled and condensed in order to give a liquid product and gaseous product.

## Patentansprüche

1. Verfahren zur Behandlung von während der Pyrolyse von Kohlenstofffaser-Verbundmaterialien erzeugten Dämpfen, das das Durchströmen der Dämpfe durch einen mit einem Feststoffbett gefüllten Reaktor, der sich auf einer hohen Temperatur von zwischen 500 °C und 1000 °C befindet, umfasst.

2. Verfahren zur Behandlung nach Anspruch 1, wobei das Feststoffbett ausgewählt ist aus der Gruppe, gebildet durch Quarz, keramische und feuerfeste Materialien, Koks und Kohlenstofffeststoffe aus der Pyrolyse von Biomasse, und Gemische davon.

3. Verfahren zur Behandlung nach einem der Ansprüche 1 oder 2, wobei das Feststoffbett und ein Feststoffkatalysator mit einer Säurefunktion, einer Reformierungsfunktion oder beiden verwendet werden.

4. Verfahren zur Behandlung nach Anspruch 3, wobei der Feststoffkatalysator mindestens ein auf einem sauren Trägermaterial getragenes Übergangsmetalloxid umfasst.

5. Verfahren zur Behandlung nach Anspruch 4, wobei das Übergangsmetalloxid aus der Gruppe von Nickeloxid, Rutheniumoxid, Palladiumoxid, Rhodiumoxid, Platinoxid und Iridiumoxid und den Gemischen davon ausgewählt ist, vorzugsweise Nickeloxid.

6. Verfahren zur Behandlung nach Anspruch 4 oder 5, wobei der Feststoffkatalysator weiterhin mindestens ein Modifikator-Metalloxid, das ausgewählt ist aus der Gruppe, gebildet durch Lanthanoxid, Magnesiumoxid, Kaliumoxid, Natriumoxid, Calciumoxid, Ceroxid, Zirconiumoxid, Zinkoxid und Gemische davon, umfasst.

7. Verfahren zur Behandlung nach einem der Ansprüche 4 bis 6, wobei das Trägermaterial ausgewählt ist aus der Gruppe, gebildet durch Aluminiumoxid (α und γ), Zeolithe, Siliciumdioxid, Titan, mesoporöse Materialien, amorphes Siliciumdioxid-Aluminiumoxid und die Gemische davon.

8. Verfahren zur Behandlung nach einem der Ansprüche 3 bis 7, wobei der Feststoffkatalysator handelsüblich ist oder hergestellt wird gemäß einem Verfahren, umfassend das Herstellen von mindestens einem auf einem sauren Trägermaterial getragenen Metalloxid unter Verwendung des Nassimprägnierungsverfahrens.

9. Verfahren zur Behandlung nach einem der Ansprüche 3 bis 8, wobei der Feststoffkatalysator in dem Reaktor mit der kommerziell hergestellten geometrischen Form platziert wird.

10. Verfahren zur Behandlung nach einem der Ansprüche 3 bis 8, wobei der Feststoffkatalysator in Pulverform verwendet wird.

11. Verfahren zur Behandlung nach Anspruch 10, wobei das Feststoffkatalysator-Pulver auf dem Feststoffbett des Reaktors verteilt eingebracht wird.

12. Verfahren zur Behandlung nach Anspruch 10, wobei der Feststoffkatalysator in Pulverform auf einen Monolithen aus einem Material, ausgewählt aus der Gruppe, gebildet durch keramische Materialien, Metallverbindungen und die Gemische davon, imprägniert wird.

13. Verfahren zur Behandlung nach Anspruch 12, wobei der Monolith ein keramisches Material, vorzugsweise Cordierit, ist.

14. Verfahren zur Behandlung nach einem der Ansprüche 3 bis 13, wobei die Reduktion des Metalloxids/der Metalloxide des Feststoffkatalysators innerhalb des Reaktors der Behandlung oder außerhalb des Reaktors vor seinem Einbringen darin durchgeführt wird.

15. Verfahren zur Behandlung nach einem der vorangehenden Ansprüche, wobei die resultierenden Dämpfe, die den Reaktor passiert haben, abgekühlt und kondensiert werden, um ein flüssiges Produkt und ein gasförmiges Produkt zu ergeben.

## Revendications

1. Procédé de traitement de la vapeur générée pendant la pyrolyse de composites de fibres de carbone, qui comprend le passage des vapeurs à travers un réacteur rempli d'un lit solide qui est à une température élevée comprise entre 500 °C et 1 000 °C.

2. Procédé de traitement selon la revendication 1, dans lequel le lit solide est choisi dans le groupe formé par le quartz, les matériaux céramiques et réfractaires, le coke et les solides de carbone provenant de la pyrolyse de biomasses, et les mélanges de ceux-ci.

3. Procédé de traitement selon l'une des revendications 1 ou 2, dans lequel le lit solide et un catalyseur solide ayant une fonction acide, une fonction de reformage, ou les deux, sont utilisés.

4. Procédé de traitement selon la revendication 3, dans lequel le catalyseur solide comprend au moins un oxyde de métal de transition supporté sur un substrat acide.

5. Procédé de traitement selon la revendication 4, dans lequel l'oxyde de métal de transition est choisi dans le groupe constitué par l'oxyde de nickel, l'oxyde de ruthénium, l'oxyde de palladium, l'oxyde de rhodium, l'oxyde de platine et l'oxyde d'iridium et les mélanges de ceux-ci, de préférence l'oxyde de nickel.

6. Procédé de traitement selon la revendication 4 ou 5, dans lequel le catalyseur solide comprend en outre au moins un oxyde métallique modificateur, qui est choisi dans le groupe formé par l'oxyde de lanthane, l'oxyde de magnésium, l'oxyde de potassium, l'oxyde de sodium, l'oxyde de calcium, l'oxyde de cérium, l'oxyde de zirconium, l'oxyde de zinc et les mélanges de ceux-ci.

7. Procédé selon l'une quelconque des revendications 4 à 6, dans lequel le substrat est choisi dans le groupe formé par l'alumine (α et γ), les zéolithes, la silice, le titane, les matériaux mésoporeux, la silice-alumine amorphe, et les mélanges de ceux-ci.

8. Procédé de traitement selon l'une quelconque des revendications 3 à 7, dans lequel le catalyseur solide est commercial ou préparé selon un procédé comprenant la préparation d'au moins un oxyde métallique supporté sur un substrat acide en utilisant le procédé d'imprégnation par voie humide.

9. Procédé de traitement selon l'une des revendications 3 à 8, dans lequel le catalyseur solide est placé dans le réacteur avec la forme géométrique préparée commercialement.

10. Procédé de traitement selon l'une des revendications 3 à 8, dans lequel le catalyseur solide est utilisé sous forme de poudre.

11. Procédé de traitement selon la revendication 10, dans lequel la poudre de catalyseur solide est insérée dispersée sur le lit solide du réacteur.

12. Procédé de traitement selon la revendication 10, dans lequel le catalyseur solide en poudre est imprégné sur un monolithe d'un matériau choisi dans le groupe formé par les matériaux céramiques, les composés métalliques et les mélanges de ceux-ci.

13. Procédé de traitement selon la revendication 12, dans lequel le monolithe est un matériau céramique, de préférence de la cordiérite.

14. Procédé de traitement selon l'une quelconque des revendications 3 à 13, dans lequel la réduction du ou des oxydes métalliques du catalyseur solide est réalisée à l'intérieur du réacteur du traitement ou à l'extérieur du réacteur avant son insertion dans celui-ci.

15. Procédé de traitement selon l'une quelconque des revendications précédentes, dans lequel les vapeurs résultantes qui ont traversé le réacteur sont refroidies et condensées afin de donner un produit liquide et un produit gazeux.
